# EUROPEAN PATENT APPLICATION

(11) **EP 1 617 668 A1**
(43) Date of publication of application: **18.01.2006**
(21) Application number: 04706808.5
(22) Date of filing: 30.01.2004
(51) Int. Cl.: H04N 7/173

(54) **STREAM RECEPTION DEVICE**

(30) Priority: 18.04.2003 JP 2003114905
(71) Applicant: MATSUSHITA ELECTRIC INDUSTRIAL CO., LTD., Kadoma-shi, Osaka 571-8501 (JP)
(72) Inventor: KUWABARA, Takashi, Yokohama-shi, Kanagawa 224-0054 (JP); IBARAKI, Susumu, Yokohama-shi, Kanagawa 225-0002 (JP); MORI, Toshiaki, Osaka 562-0001 (JP); HATTORI, Toshikazu, Yokohama-shi, Kanagawa 226-0025 (JP)
(74) Representative: Balsters, Robert
(86) International application number: PCT/JP2004/000927
(87) International publication number: WO 2004/095842

(57) **Abstract**

In a stream reception device, before the user operates an input section (15), a control section (12) uses locational information of each of n number of selected stream transmission stations (2) to generate and send a distribution request (R) , which is data for requesting distribution of a stream (ST) stored in each of the stream transmission stations (2). Then, each stream (ST) is buffered in a stream storage section (14) sequentially from a reproduction start portion thereof. Then, in the case where a stream (ST) to be a target is stored, the control section (12) reads the target stream (ST) from the stream storage section (14), sequentially from the reproduction start portion thereof, and reproduces the target stream (ST), in response to an operation on the input section (15).

## Description

### TECHNICAL FIELD

The present invention relates to a stream reception device, and more specifically to a stream reception device capable of starting reproduction of received data before the entire data is received from a stream transmission station.

### BACKGROUND ART

For performing data distribution by a server device using a digital network, a technology which allows received data to be reproduced before the entire data is received by a client device, i.e., streaming, has recently been a center of attention. Hereinafter in this description, data distributed by such a streaming technology will be referred to as a "stream". In general, a stream is a content which has a characteristic of changing along the time from the start until the end thereof, such as audio, moving picture, news, weather forecast or traffic information. A server device for distributing such a stream will be referred to as a "stream transmission station" in this description. A client device for receiving a stream from the stream transmission station and reproducing the stream will be referred to as a "stream reception device" in this description.

One example of conventional stream reception devices is disclosed in Gekkan (Monthly) Mac Power, the August 2002 issue (published by ASCII Corporation). A conventional stream reception device adopts a special technology called "Instant-On". From immediately after the user operates the stream reception device to select a station until reproduction is started, a stream transmission station compatible with Instant-On sends out a designated stream to a digital network at a high transmission rate. Accordingly, immediately after the user selects the channel, a larger amount of stream arrives at the stream reception device than usual. The stream reception device also buffers the stream, which has arrived, in a buffer having a relatively small capacity, and reproduces the buffered stream. As a result, the time period required from the station selection by the user until the start of reproduction, i.e., the buffering wait time, is shortened.

### DISCLOSURE OF THE INVENTION

However, the conventional Instant-On has a problem that the stream transmission station needs to obtain a large bandwidth for stream transmission because a large amount of stream is sent out immediately after the station selection. The conventional Instant-On also has the following problem: The large amount of stream does not arrive immediately after the station selection unless the stream transmission station itself is compatible with Instant-On. Therefore, even if the stream reception device is compatible with Instant-On, the buffering wait time may possibly be extended.

Therefore, the present invention has an object of providing a stream reception device capable of shortening the buffering wait time without relying on the processing performed on the side of the stream transmission station or the bandwidth of the transmission path.

To achieve the above object, a first aspect of the present invention is directed to a stream reception device capable of starting reproduction of a received stream before receiving the entirety of the stream from a transmission station. The stream reception device comprises a selection section for selecting a transmission station by a predetermined method; a transmission section for generating a distribution request, which is for requesting the transmission station selected by the selection section to distribute a stream, and sending out the distribution request; a reception section for receiving the stream sent out by the distribution station in response to the distribution request sent out by the transmission section; a storage section for buffering the stream received by the reception section; an input section operable by a user to designate a transmission station favored by the user; and a reproduction section for reproducing the stream which is stored in the storage section and distributed by the transmission station designated by the input section. The selection section selects the transmission station by the predetermined method before the input section is operated.

More specifically, the storage section buffers a portion of the stream at which the stream is started to be reproduced by the reproduction section.

The input section includes, for example, a predetermined number ofstationselection buttonswhich are respectively assigned locational information of the transmission stations different from each other. In this case, the selection section selects all or a part of the transmission stations assigned to the station selection buttons.

In the case where the pieces of locational information of a predetermined number of transmission stations are registered in the stream reception device in a predetermined order, the input section is capable of sequentially designating the pieces of locational information registered in the predetermined order. In this case, the selection section selects all or a part of the transmission stations which can be designated by the input section. The selection section more preferably selects a plurality of transmission stations specified by the locational information currently designated by the input section and the locational information near the currently designated locational information.

The reproduction section further reproduces another stream which is pre-acquired before the input section is operated.

The stream reception device further comprises a preset information storage section for storing at least a start time at which distribution of a stream favored by the user is scheduled to start. The selection section refers to the start time in the preset information storage section to select the transmission station.

A second aspect of the present invention is directed to a stream reception method capable of starting reproduction of a received stream before the entirety of the stream from a transmission station is received. The method comprises a selection step of selecting a transmission station by a predetermined method; a transmission step of generating a distribution request, which is for requesting the transmission station selected in the selection step to distribute a stream, and sending the distribution request; a reception step of receiving the stream sent out by the distribution station in response to the distribution request sent out in the transmission step; a buffering step of buffering the stream received in the reception step; and a reproduction step of reproducing the stream which is stored in the buffering step and distributed by the transmission station designated by a user. The selection step selects the transmission station by the predetermined method before an operation by the user.

According to the above-described aspects of the present invention, before the user operates the input section, the stream reception device is capable of actively sending a distribution request to each of the selected transmission stations. After sending out the distribution request, the stream reception device buffers a stream from each transmission station. Then, in response to an operation on the input section by the user, the stream reception device reproduces the buffered stream. This allows the stream reception device to shorten the buffering wait time without relying on the processing performed on the side of the transmission stations.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram illustrating a structure of a stream reception device according to one embodiment of the present invention.
FIG. 2 is a schematic view illustrating an exemplary structure of an input section 15 shown in FIG. 1.
FIG. 3 is a flowchart illustrating a procedure of processing performed by the stream reception device 1 shown in FIG. 1.
FIG. 4 is a sequence chart illustrating a procedure of data communication performed between the stream reception device 1 and the stream transmission stations 2 shown in FIG. 1.
FIG. 5 is a schematic view illustrating station selection buttons 151 which can specify the stream transmission stations selected in step A2 shown in FIG. 3.
FIG. 6 is a block diagram illustrating a structure of a first modification (stream reception device 1a) of the stream reception device 1 shown in FIG. 1.
FIG. 7 is a schematic view illustrating an exemplary structure of an input section 18 shown in FIG. 6.
FIG. 8 is a sequence chart illustrating a procedure of data communication performed between the stream reception device 1a and the stream transmission stations 2 shown in FIG. 6.
FIG. 9 is a flowchart illustrating a procedure of processing performed by the stream reception device 1a shown in FIG. 6.
FIG. 10 is a block diagram illustrating a structure of a second modification (stream reception device 1b) of the stream reception device 1 shown in FIG. 1.
FIG. 11 is a sequence chart illustrating a procedure of data communication performed between the stream reception device 1b and the stream transmission stations 2 shown in FIG. 10.
FIG. 12 is a flowchart illustrating a procedure of processing performed by the stream reception device 1b shown in FIG. 10.

### BEST MODE FOR CARRYING OUT THE INVENTION

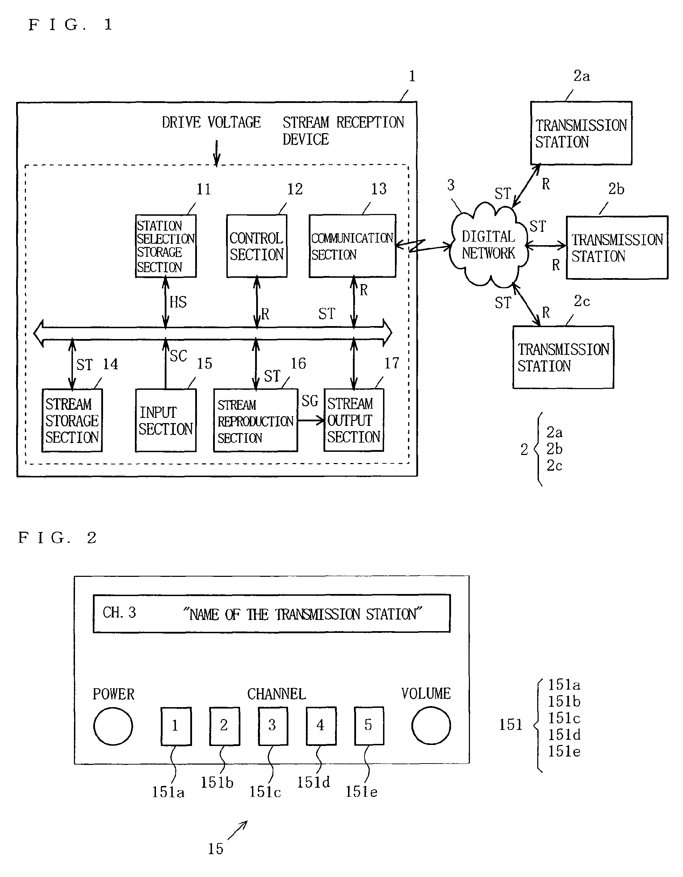

FIG. 1 is a block diagram illustrating a structure of a stream reception device according to one embodiment of the present invention. In FIG. 1, a stream reception device 1 is connected to one or more stream transmission stations 2 (labeled simply as "transmission station" in FIG. 1) via a digital network 3 typified by the Internet. FIG. 1 illustrates three stream transmission stations 2a, 2b and 2c as an example. Each stream transmission station 2 is assigned information which specifies the location thereof in the digital network 3 (hereinafter, referred to as "locational information"). For example, in the case where the digital network 3 is the Internet, a URL (Uniform Resource Locator) is the locational information. The stream transmission stations 2 each distribute a stream ST stored in advance therein in accordance with a well-known streaming technology. For receiving such a stream ST, the stream reception device 1 includes a station selection storage section 1, a control section 12, a communication section 13, a stream storage section 14, an input section 15, a stream reproduction section 16, and a stream output section 17.

The station selection storage section 11 is formed of a recording area of a non-volatile memory device. The station selection storage section 11 stores information which specifies one of station selection buttons 151 (see FIG. 2) selected by a predetermined method (hereinafter, referred to as "first station selection information") HS. In this embodiment, as an example, the first station selection information HS specifies a station selection button 151 which was last selected.

The control section 12 controls an operation of each section included in the stream reception device 1. The operation of the control section 12 will be described later and the description thereof will be omitted here.

The communication section 13 sends out a distribution request R generated in the control section 12 to the digital network 3. At the communication section 13, a stream ST sent from each stream transmission station 2 arrives via the digital network 3.

The stream storage section 14 buffers, namely, temporarily stores, the stream ST transferred from the communication section 13.

As shown in FIG. 2, the input section 15 includes one or more station selection buttons 151 operable by the user. FIG. 2 illustrates five station selection buttons 151a through 151e as an example. Each of the station buttons 151 is assigned in advance with locational information of one of the stream transmission stations 2 different from each other.

In general, each stream ST is encoded with a predetermined manner. The stream reproduction section 16 decodes the stream ST sent from the currently selected stream transmission station 2 in accordance with the encoding manner, and reproduces a signal SG which indicates a content of the decoded stream ST (typically, audio or moving picture information) under the control of the control section 12.

The stream output section 17 outputs the content indicated by the stream ST in accordance with the signal SG reproduced by the stream reproduction section 16 under the control of the control section 12.

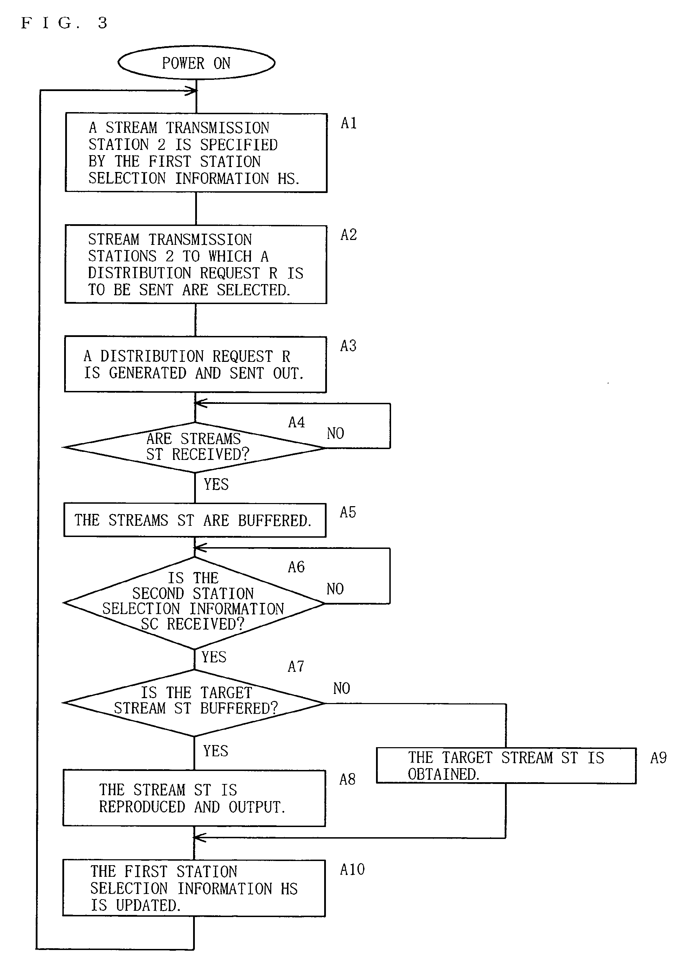

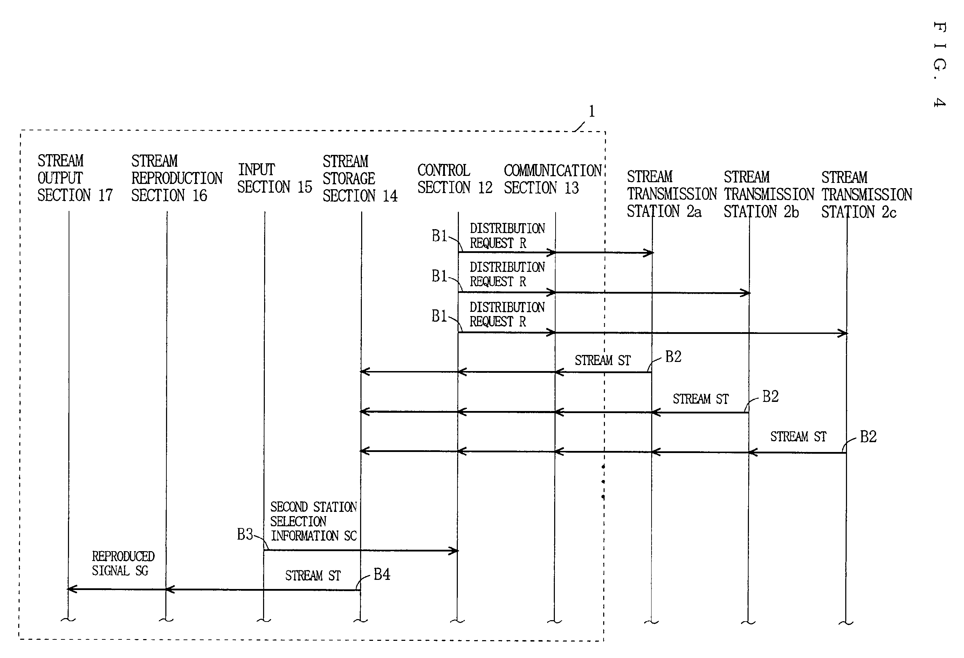

Next, data communication performed between the stream reception device 1 having the above-described structure and the stream transmission stations 2 will be described in detail with reference to FIG. 3 illustrating a flowchart and FIG. 4 illustrating a sequence chart. In FIG. 3, if the power switch (not shown) of the stream reception device 1 is operated, a drive voltage is applied to each section of the stream reception device 1. Immediately after this, the control section 12 reads the first stationselectioninformation HSfrom thestationselectionsection 11. This allows the control section 12 to recognize the station selection button 151 which was last selected. Immediately after the power switch is operated, the station selection button 151 which was selected immediately before the power switch was last turned off is recognized. Since locational information is assigned with the station selection button 151 in advance, the control section 12 can specify the stream transmission station 2 which distributed the stream ST which was last reproduced(step A1 in FIG. 3).

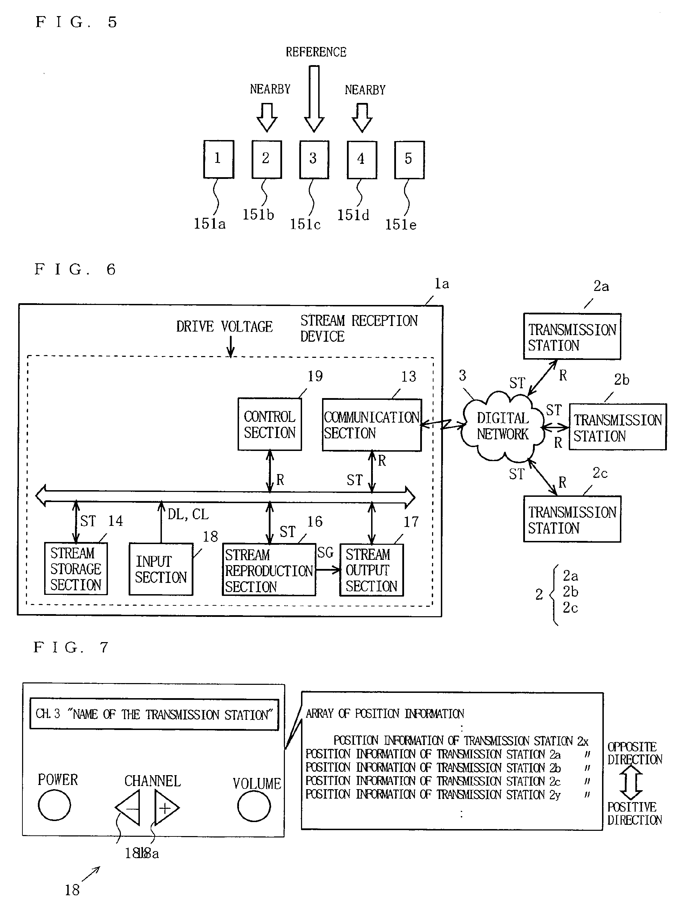

After step A1, the control section 12 preferably selects a predetermined number n of stream transmission stations 2, to which a distribution request R is to be currently sent, based on the first station selection information HS which has been read (step A2 in FIG. 3). The number of stations, n, is a natural number equal to or greater than 1. In the case where each station selection button 151 is assigned to one stream transmission station 2 as in this embodiment, the number of stations, n, is a natural number equal to or smaller than the total number of the station selection buttons 151. A typical selection method used in step A2 is as follows. The control section 12 first selects a stream transmission station 2 which can be specified by the read first station selection information HS as a station to which a distribution request R is to be sent. The control section 12 also selects station selection buttons 151 located in the vicinity of the station selection button 151, which is specified by the first station selection information HS and is to be used as a reference for selecting the remaining stream transmission stations 2, and selects stream transmission stations 2 which can be specified by such nearby station selection buttons 151 as the stations to which a distribution request 2 is to be sent. For example, as shown in FIG. 5, in the case where the station selection button 151c is specified by the first station selection information HS, the station selection buttons 151b and 151d adjacent thereto are selected as the nearby station selection buttons 151c. In this case, in stepA2, three stream transmission stations 2 are selected. Here, for the convenience of explanation, the stream transmission stations 2a, 2b and 2c are assumed to be selected in step A2.

After step A2, the control section 12 uses locational information of each of the n number of selected stream transmission stations 2 to generate a distribution request R, which is data for requesting distribution of a stream ST stored in each of the n number of selected stream transmission stations 2. The generated distribution requests R are each transferred from the control section 12 to the communication section 13 and then sent out from the communication section 13 to the digital network 3 (step A3 in FIG. 3). After this, the control section 12 waits for a stream ST to arrive from each stream transmission station 2 via the digital network 3.

The distribution requests R sent out from the stream reception device 1 in this manner are each transmitted in the digital network 3 and received by the respective stream transmission station 2 (sequence B1 in FIG. 4). Each stream transmission station 2 sends out a stream ST designated by the distribution request R sequentially from a reproduction start portion thereof to the digital network 3 based on a well known streaming technology. The stream ST sent out from each stream transmission station 2 is transmitted in the digital network 3 and received by the stream reception device 1 (sequence B2 in FIG. 4).

In the stream reception device 1, the communication section 13, upon receiving each stream ST (step A4 in FIG. 3), buffers each received stream ST sequentially from the reproduction start portion thereof in the stream storage section 14, under the control of the control section 12 (step A5 in FIG. 3 and sequence B2 in FIG. 4). After this, the control section 12 waits for second station selection information SC to be sent from the input section 15.

In the case where the stream transmission stations 2a, 2b and 2c are selected in step A2 as assumed above, as shown in FIG. 4, the distribution request R is sent to each of the stream transmission stations 2a, 2b and 2c, and the stream reception device 1 receives the stream ST from each of the stream transmission stations 2a, 2b and 2c and buffers the stream ST.

The user, after starting the stream reception device 1, operates one of the station selection buttons 151 of the input section 15 to designate the stream transmission station 2 distributing the stream ST to be currently reproduced. The input section 15 generates the second station selection information SC, which is information uniquely specifying the stream transmission station 2 currently specified by the user, and sends the second station selection information SC to the control section 12. Upon receiving the second station selection information SC sent from the input section 15 (step A6 in FIG. 3 and sequence B3 in FIG. 4), the control section 12 determines whether or not the stream ST from the stream transmission station 2 specified by the received second station selection information SC is stored in the stream storage section 14 (step A7).

If the stream ST to be a target is stored, the control section 12 reads the target stream ST from the stream storage section 14, sequentially from a reproduction start portion thereof, and transfers the target stream ST to the stream reproduction section 16. The stream reproduction section 16 reproduces a signal SG from the received stream ST and sends the reproduced signal SG to the stream output section 17, under the control of the control section 12. The stream output section 17 outputs a content indicated by the target stream ST sequentially from the start thereof in accordance with the signal SG reproduced by the stream reproduction section 16, under the control of the control section 12 (step A8 in FIG. 3 and sequence B4 in FIG. 4).

The control section 12 updates the first station selection information HS stored in the station selection storage section 11 into information specifying the operation button 151 which can be specified by the second station selection information SC received in step A6 (step A9). After this, the control section 12 executes step A1 again.

If the target stream ST is not stored in step A7, the stream reception device 1 obtains a stream ST from the stream transmission station 2 specified by the received second station selection information SC based on a well-known streaming technology (step A10). After this, the control section 12 executes step A9.

The stream reception device 1 repeats the processing specified in steps A1 through A10 described above until the power switch is turned off.

As described above, according to this embodiment, before the user operates a station selection button 151, the stream reception device 1 actively sends a distribution request R to each of the n number of stream transmission stations 2 using the first station selection information HS stored in the station selection storage section 11. After sending out the distribution request R, the stream reception device 1 buffers a reproduction start portion of the stream ST, which is sent from each of the stream transmission stations 2, in the stream storage section 14 and waits for the user to operate a station selection button 151. After this, in the case where a stream ST from the stream transmission station 2 designated by the user is already stored in the stream storage section 14 when the stream reception device 1 receives the second station selection information SC, the stream reception device 1 reproduces the stored stream ST sequentially from the reproduction start portion thereof, and outputs a content indicated by the reproduced stream ST. In this way, the stream reception device 1 predicts the stream transmission stations 2 to which the distribution request R is to be sent out, and further sends out the distribution request R to the stream transmission stations 2 before the user operates the operation button 151. This allows the stream reception device 1 to shorten the buffering wait time without relying on the processing performed on the side of the stream transmission stations 2.

In the above embodiment, the stream reception device 1 is described as performing bidirectional data communication with the stream transmission stations 2 via the digital network 3. The present invention is not limited to this, and the stream transmission stations 2 may distribute streams ST using broadcast channels. In this case, it is necessary to establish uplinks from the stream reception device 1 to the stream transmission stations 2 using another transmission medium. Also in this case, the buttons 151 are each assigned a broadcast channel instead of the locational information.

In the above embodiment, the first station selection information HS is described as specifying the station selection button 151 which was last selected. The present invention is not limited to this, and the first station selection information HS may be locational information of all the n number of stream transmission stations 2 to which the distribution request R is to be sent out. In this case, in step A2, the n number of stream transmission stations 2 specified by the first station selection information HS are selected.

It is also possible to send the distribution request R first to the stream transmission station 2 specified by the station selection button 151 to be used as a reference among the selected n number of stream transmission stations 2, and send the distribution request R to the stream transmission stations 2 specified by the nearby station selection buttons 151 a predetermined time period later. Namely, there may be provided a time difference regarding the buffering time of the streams ST.

The stream reception device 1 may acquire in advance data indicating contents other than the content of the stream ST and reproduce the acquired data before the user operates the input section 15.

FIG. 6 is a block diagram illustrating a structure of a stream reception device 1a according to a first modification of the stream reception device 1 shown in FIG. 1. In FIG. 6, the stream reception device 1a is connected to one or more stream transmission stations 2 (stream transmission stations 2a through 2c are shown in FIG. 6 as an example) via the digital network 3, like the stream reception device 1 described above. However, unlike the stream reception device 1, the stream reception device 1a includes an input section 18 and a control section 19 instead of the station selection storage section 11, the control section 12 and the input section 15. The stream reception device 1a has no other differences from the stream reception device 1. Thus, in FIG. 6, identical elements to those shown in FIG. 1 bear identical reference numerals thereto, and descriptions thereof will be omitted.

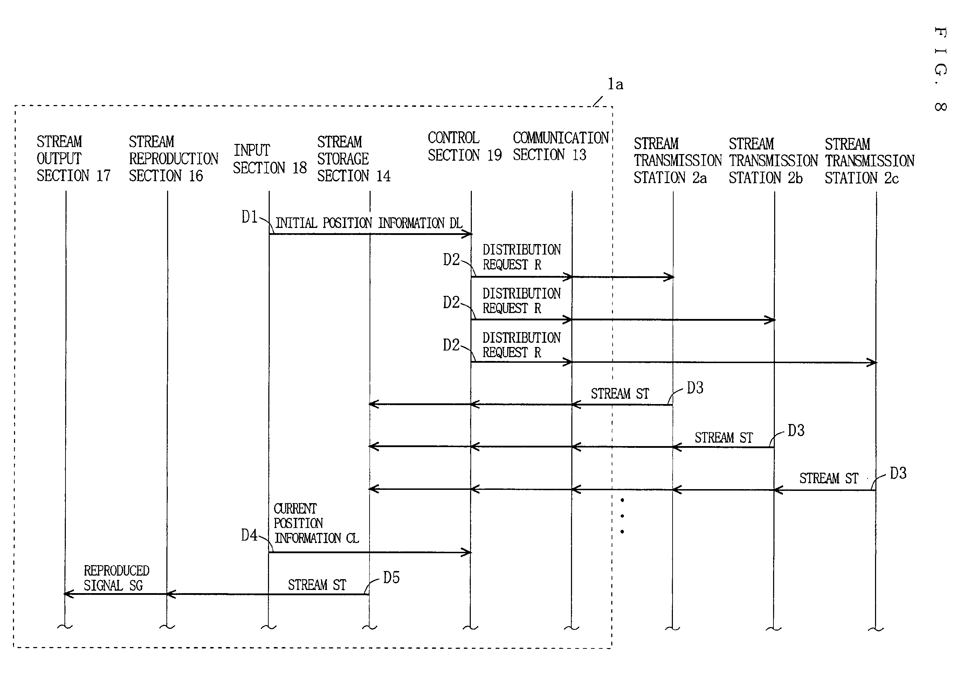

As shown in FIG. 7, the input section 18 includes two station selection buttons 18a and 18b. In the stream reception device 1a, pieces of locational information assigned to a plurality of stream transmission stations 2 are registered in a predetermined order. Hereinafter in this modification, a set of the pieces of locational information registered in the predetermined order will be referred to as an "array". If the power switch of the stream reception device 1a is operated, the input section 18 selects the locational information assigned to a predetermined position in the array. The locational information selected at this point is, for example, one piece of locational information which is pre-registered in the stream reception device 1a as the information to be selected first, or the locational information which was selected if the power switch of the stream reception device 1a was last turned off. Immediately after the power switch is operated, the input section 18 sends such initially selected locational information to the control section 19 as initial locational information DL.

Once the station selection button 18a is operated, the input section 18 selects locational information which is offset in the order by one piece in the array in a predetermined positive direction with respect to the locational information which was set immediately before the station selection button 18a was operated (see FIG. 7). Then, the input section 18 sends locational information currently selected to the control section 19 as current locational information CL. By contrast, once the station selection button 18b is operated, the input section 18 selects, as locational information indicating the current stream transmission station 2, locational information which is offset in the order by one piece in the array in a predetermined opposite direction with respect to the locational information which was set immediately before the station selection button 18b was operated (see FIG. 7). Then, the input section 18 sends the locational information currently selected to the control section 19 as current locational information CL.

The control section 19 controls an operation of each section included in the stream reception device 1a. The operation of the control section 19 will be described later and the description thereof will be omitted here.

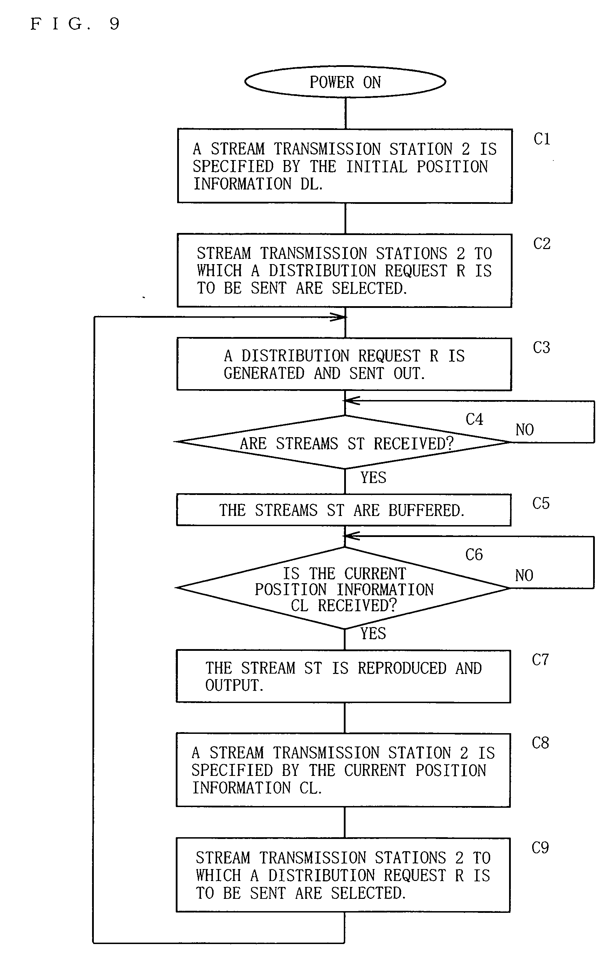

Next, data communication performed between the stream reception device 1a having the above-described structure and the stream transmission stations 2 will be described in detail with reference to FIG. 8 showing a sequence chart and FIG. 9 showing a flowchart. The operation of the stream transmission stations 2 is substantially the same as that in the above-described embodiment and the description thereof will be omitted. In FIG. 8 and FIG. 9, when the power switch (not shown) of the stream reception device 1a is operated, a drive voltage is applied to each section of the stream reception device 1a. Immediately after this, the input section 18 sends the above-described initial locational information DL to the control section 19 (sequence D1 in FIG. 8). The control section 19 now determines to send out a current distribution request R to the stream transmission station specified by the received initial locational information DL (step C1 in FIG. 9).

Next, the control section 19 refers to the initial locational information DL obtained in step C1 to select a predetermined number (m - 1) of stream transmission stations 2 to which the distribution request R is to be currently sent, in addition to the stream transmission station 2 determined in step C1 (step C2). Here, the number of stations, m, is a natural number equal to or greater than 1. Since the total number of pieces of locational information which can be registered in the stream reception device 1a is limited as in this modification, the number of stations, m, is a natural number equal to smaller than the number of the pieces of locational information registered. When m = 1, step C2 is not executed.

A typical selection method used in step C2 is as follows. The control section 19 selects the first locational information and the final locational information from the above-de scribed array. The first locational information is the locational information registered at a location which is offset by a predetermined number of pieces in the above-described locational information array in the opposite direction with reference to the locational information recognized in step C1. The final locational information is the locational information registered at a location which is offset by a predetermined number of pieces in the above-described locational information array in the positive direction with reference to the locational information recognized in step C1. If the first locational information and the final locational information are offset in the positive direction and the opposite direction by the same number of pieces, the same number is (m - 1)/2.

By steps C1 and C2, the control section 19 can specify the m number of stream transmission stations 2 to which the distribution request R is to be currently sent out. For example, it is assumed as shown in FIG. 7 that an array including the pieces of locational information arranged in the order of the stream transmission stations 2a, 2b and 2c are registered in the stream reception device 1a. With this assumption, when the locational information of the stream transmission station 2b is selected in step C1 and (m - 1) /2 is 1, the control section 19 determines to send the distribution request R to the three stream transmission stations 2a through 2c.

After step C2, the control section 19 operates as in steps A3 through A5 described above (steps C3 through C5) . As a result, streams ST, distributed from the stream transmission stations 2 which received the distribution request R, are buffered in the stream storage section 14 sequentially from a reproduction start portion thereof (sequences D2 and D3).

In the case where the distribution request R is sent to the stream transmission stations 2a, 2b and 2c in step C3 as assumed above, as shown in FIG. 8, the stream reception device 1a receives a stream ST from each of the stream transmission stations 2a, 2b and 2c and buffers the stream ST.

The user, after starting the stream reception device 1a, operates the station selection button 18a or 18b of the input section 18 to search for the stream transmission station 2 distributing his/her favorite stream ST. In response to the operation by the user, the input section 18 generates the above-mentioned current locational information CL and sends the current locational information CL to the control section 19. Upon receiving the current locational information CL sent from the input section 18 (sequence D4 and step C6), the control section 19 finds, from the stream storage section 14, the stream ST sent from the stream transmission station 2 specified by the received current locational information CL, reads the stream ST to be a target sequentially from a reproduction start portion thereof, and transfers the target stream ST to the stream reproduction section 16. As a result, the stream output section 17 outputs a content indicated by the target stream ST sequentially from the start thereof as in the above-described embodiment (sequence D5 and step C7).

Next, the control section 19 determines to send the distribution request R to the stream transmission station 2 specified by the received current locational information CL (step C8). The control section 19 also refers to the initial locational information obtained in step C8 to select a predetermined number (m - 1) of stream transmission stations 2 to which the distribution request R is to be currently sent, in addition to the stream transmission station 2 determined in step C8 (step C9). The method used in step C9 may be substantially the same as the method used in step C2. By steps C8 and C9, another m number of stream transmission stations 2 are determined, and then the control section 19 executes step C3.

As described above, according to this modification, before the user operates the station selection button 18a or 18b, the stream reception device 1a refers to the initial locational information DL or the current locational information CL sent from the input section 18 to actively send a distribution request R to each of the m number of stream transmission stations 2. After sending out the distribution request R, the stream reception device 1a buffers a reproduction start portion of the received streams ST and waits for the user to operate the station selection button 18a or 18b. After this, in response to the current locational information CL, the stream reception device 1a reproduces the buffered stream ST sequentially from the start portion thereof, and outputs a content indicated by the reproduced stream ST. In this way, the stream reception device 1a sends out the distribution request R to the stream transmission stations 2 distributing the streams ST that the user is predicted to select now. This allows the stream reception device 1a to shorten the buffering wait time without relying on the processing performed on the side of the stream transmission stations 2.

In this modification, each time the station selection button 18a or 18b is operated, the locational information which is offset by one piece in the array in the positive or opposite direction is set. Therefore, the locational information that the user is now to select is included in the m number of pieces of locational information selected in the processing shown in FIG. 9. Owing to this, the stream reception device 1a according to this modification provides the effect of capable of omitting step A7 performed by the stream reception device 1.

In the stream reception device 1a according to this modification, each time the station selection button 18a or 18b is operated, the locational information which is offset by one piece in the array in the positive or opposite direction is set. Therefore, the m number of pieces of locational information last selected and the m number of pieces of locational information currently selected partially match each other. In the above description, an example in which as a result of executing step C1 and C2, the distribution request R is sent to the stream transmission stations 2a, 2b and 2c is described. In this example, the m number of pieces of locational information selected in steps C8 and C9 is a combination of the locational information of the stream transmission stations 2x, 2a and 2b, or a combination of the locational information of the stream transmission stations 2b, 2c and 2y. Here, the locational information of the stream transmission station 2x is, as shown in FIG. 7, locational information which is located at a locational offset by one piece in the array in the opposite direction with respect to the locational information of the stream transmission station 2a. The locational information of the stream transmission station 2y is locational information which is located at a locational offset by one piece in the array in the positive direction with respect to the locational information of the stream transmission station 2c. Based on this, after step C9, the stream ST, obtained from the stream transmission station 2 which last sent out the distribution request R but does not currently send any distribution request R, is unnecessary and is preferably erased from the stream storage section 14.

In this modification, the station selection buttons 18a and 18b are used in order to set the locational information which is offset by one piece in the array in the positive or opposite direction. The present invention is not limited to this, and a station selection dial may be used.

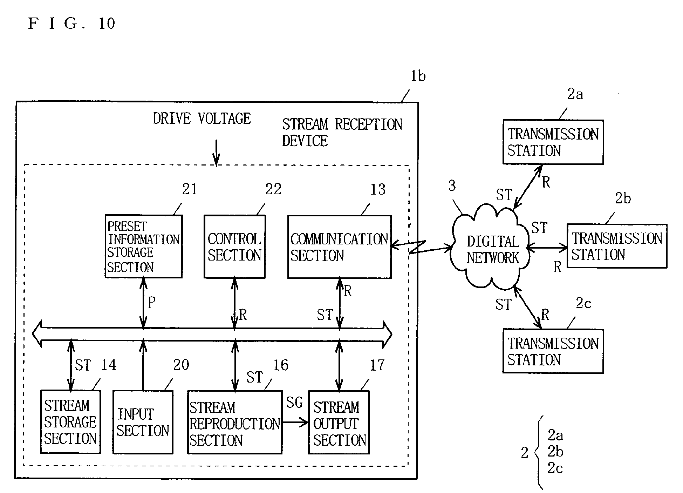

FIG. 10 is a block diagram showing a structure of a stream reception device 1b according to a second modification of the stream reception device 1 shown in FIG. 1. In FIG. 10, the stream reception device 1b is connected to one or more stream transmission stations 2 (stream transmission stations 2a through 2c are shown in FIG. 6 as an example) via the digital network 3, like the stream reception device 1 described above. However, unlike the stream reception device 1, the stream reception device 1b includes an input section 20, a preset information storage section 21 and a control section 22 instead of the station selection storage section 11, the control section 12 and the input section 15. The stream reception device 1b has no other differences from the stream reception device 1. Thus, in FIG. 10, identical elements to those shown in FIG. 1 bear identical reference numerals thereto, and descriptions thereof will be omitted.

The input section 20 is a device for the user to input at least a start time, at which distribution of his/her favorite stream ST is scheduled to be started, and locational information of the stream transmission station 2 which is to distribute such a stream ST. In this modification, a stream ST is a content having a special characteristic of being directly distributed from the site of an even, such as a live program, in addition to the above-described characteristic.

The preset information storage section 21 stores a combination of the start time and the locational information input by the user via the input section 20 as preset information P.

The control section 22 controls an operation of each section included in the stream reception device 1b. The operation of the control section 22 will be described later and the description thereof will be omitted here.

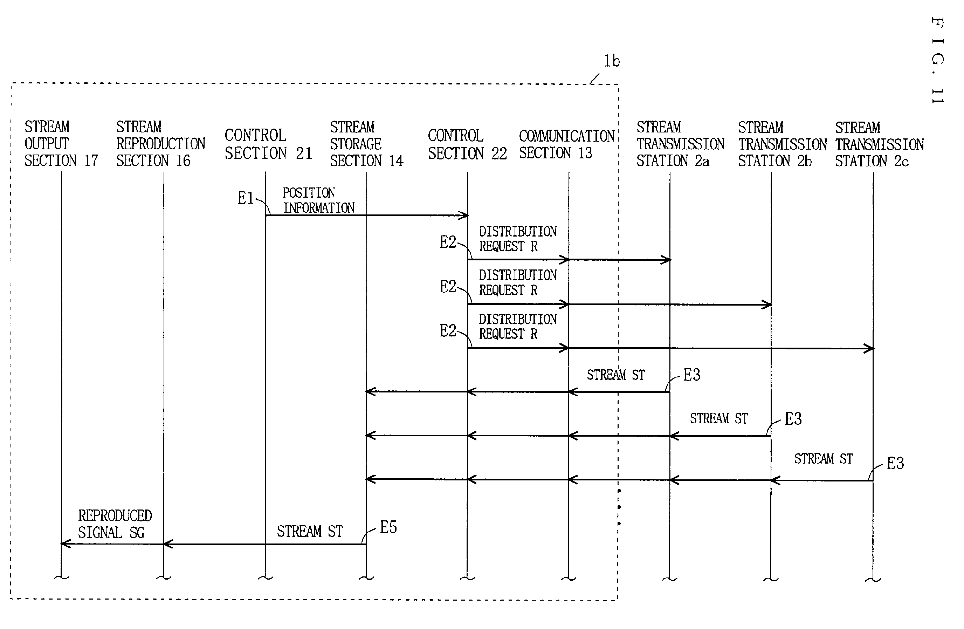

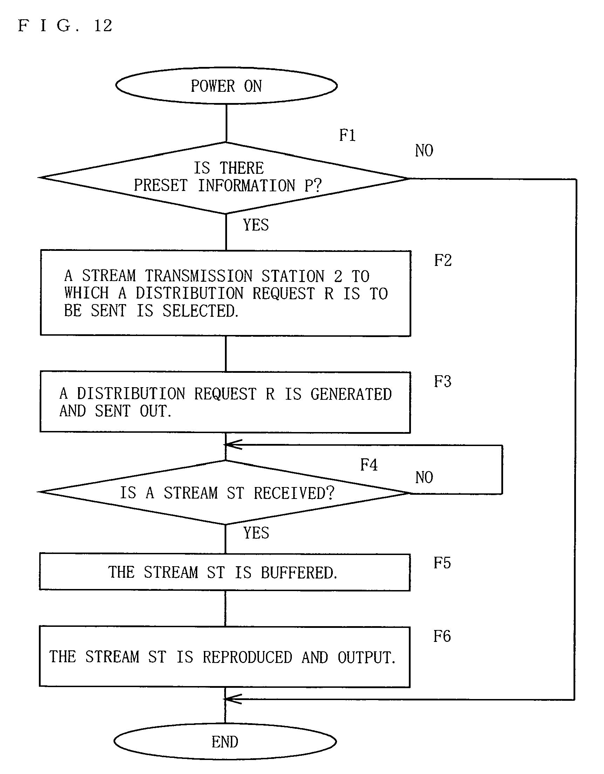

Next, data communication performed between the stream reception device 1b having the above-described structure and the stream transmission stations 2 will be described in detail with reference to FIG. 11 showing a sequence chart and FIG. 12 showing a flowchart. The operation of the stream transmission stations 2 is substantially the same as that in the above-described embodiment and the description thereof will be omitted. In FIG. 11 and FIG. 12, the user operates the input section 20 to input the start time and the locational information. Such information is stored in the preset information storage section 21 as preset information P (sequence E1 in FIG. 11). After this, the control section 22 periodically checks each start time stored in the preset information storage section 21 and determines whether or not there is preset information P, the start time of which will come in a predetermined time period(step F1 in FIG. 12). The predetermined time period is determined as follows. A certain length of time is required from the time the stream reception device 1b starts generating a distribution request R until the generated distribution request R arrives at a stream transmission station 2. Therefore, the distribution request R needs to have arrived at the stream transmission station 2 by the start time. The predetermined time period is selected so as to fulfill such a condition.

When there is no preset information P to be a target, the control section 22 terminates the processing in FIG. 12. When there is preset information P to be a target, the control section 22 determines to now send out the current distribution request R to the stream transmission station 2 specified by such locational information included in the preset information P (step F2).

After step F2, the control section 22 operates as in steps A3 through A5 described above (steps F3 through F5). As a result, a stream ST distributed from the stream transmission station 2 which received the distribution request R is buffered in the stream storage section 14 sequentially from a reproduction start portion thereof (sequences E2 and E3).

The control section 22 also finds the buffered stream ST from the stream storage section 14, reads the stream ST to be a target sequentially from a reproduction start portion thereof, and transfers the target stream ST to the stream reproduction section 16. As a result, the stream output section 17 outputs a content indicated by the target stream ST sequentially from the start thereof as in the above-described embodiment (sequence E4 and step F6).

As described above, according to this modification, even without the user selecting a channel, the stream reception device 1b refers to the preset information P to actively send a distribution request R to a specific stream transmission station 2. After sending out the distribution request R, the stream reception device 1b buffers a reproduction start portion of the received stream ST and starts reproduction. In this way, the stream reception device 1b sends out the distribution request R a predetermined time period earlier to the stream transmission station 2 distributing a stream ST that the user plans to view now. This allows the stream reception device 1b to shorten the buffering wait time without relying on the processing performed on the side of the stream transmission stations 2.

The present invention has been described in detail, but the above description is exemplary in every sense and is never intended to limit the present invention. It is understood that many other alterations and modifications are possible without departing from the scope of the present invention.

### INDUSTRIAL APPLICABILITY

A stream reception device according to the present invention is capable of shorting the buffering wait time and is applicable to an internet radio, a personal computer or the like.

## Claims

1. A stream reception device capable of starting reproduction of a received stream before receiving the entirety of the stream from a transmission station, the stream reception device comprising:
a selection section for selecting a transmission station by a predetermined method;
a transmission section for generating a distribution request, which is for requesting the transmission station selected by the selection section to distribute a stream, and sending out the distribution request;
a reception section for receiving the stream sent out by the transmission station in response to the distribution request sent out by the transmission section;
a storage section for buffering the stream received by the reception section;
an input section operable by a user to designate a transmission station favored by the user; and
a reproduction section for reproducing the stream which is stored in the storage section and distributed by the transmission station designated by the input section;
wherein the selection section selects the transmission station by the predetermined method before the input section is operated.

2. A stream reception device according to claim 1, wherein the storage section buffers a portion of the stream which starts at a point at which the reproduction section begins reproduction.

3. A stream reception device according to claim 1, wherein:
the input section includes a predetermined number of station selection buttons which are respectively assigned with locational information of the transmission stations different from each other; and
the selection section selects at least one of plurality of the transmission stations assigned to the station selection buttons.

4. A stream reception device according to claim 1, wherein:
pieces of locational information for a predetermined number of transmission stations are registered in a predetermined order, and the input section is capable of sequentially designating the pieces of locational information registered in the predetermined order; and
the selection section selects at least one of the plurailty of transmission stations which are operable to be designated by the input section.

5. A stream reception device according to claim 4, wherein the selection section selects a plurality of transmission stations specified by the locational information currently designated by the input section and the locational information near the currently designated locational information.

6. A stream reception device according to claim 1, wherein the reproduction section further reproduces another stream which is pre-acquired before the input section is operated.

7. A stream reception device according to claim 1, further comprising a preset information storage section for storing at least a start time at which distribution of a stream favored by the user is scheduled to start, wherein the selection section refers to the start time in the preset information storage section to select the transmission station.

8. A stream reception method capable of starting reproduction of a received stream before the entirety of the stream from a transmission station is received, the method comprising:
a selection step of selecting a transmission station by a predetermined method;
a transmission step of generating a distribution request, which is for requesting the transmission station selected in the selection step to distribute a stream, and sending the distribution request;
a reception step of receiving the stream sent out by the distribution station in response to the distribution request sent out in the transmission step;
a buffering step of buffering the stream received in the reception step; and
a reproduction step of reproducing the stream which is stored in the buffering step and distributed by the transmission station designated by a user;
wherein the selection step selects the transmission station by the predetermined method before an operation by the user.

## Amended claims

### Amended claims under Art. 19.1 PCT

1. A stream reception device capable of starting reproduction of a received stream before receiving the entirety of the stream from a transmission station, wherein pieces of locational information for a predetermined number of transmission stations are registered in a predetermined order, the stream reception device comprising:
an input section capable of sequentially designating the pieces of locational information registered in the predetermined order, the input section being operable by the user to designate a transmission station favored by the user;
a selection section for selecting a plurality of transmission stations specified by the locational information currently designated by the input section and the locational information near the currently designated locational information;
a transmission section for generating a plurality of distribution requests for requesting each of the transmission stations selected by the selection section to distribute a stream, and sending out the distribution requests;
a reception section for receiving each of the streams sent out by the plurality of transmission stations in response to each of the distribution requests sent out by the transmission section;
a storage section for buffering each of the streams received by the reception section; and
a reproduction section for reproducing the stream which is stored in the storage section and distributed by the transmission station designated by the input section.

2. A stream reception device according to claim 1, wherein the storage section buffers a portion of the stream which starts at a point at which the reproduction section begins reproduction.

3. A stream reception device according to claim 1, wherein:
the input section includes a predetermined number of station selection buttons which are respectively assigned with the locational information of the transmission stations different from each other; and
the selection section selects at least one of plurality of the transmission stations assigned to the station selection buttons.

4. A stream reception device according to claim 1 , wherein the reproduction section further reproduces another stream which is pre-acquired before the input section is operated.

5. A stream reception device according to claim 1 , further comprising a preset information storage section for storing at least a start time at which distribution of a stream favored by the user is scheduled to start, wherein the selection section refers to the start time in the preset information storage section to select the transmission station.

6. A stream reception method capable of starting reproduction of a received stream in a reception station before the reception station receives the entirety of the stream from a transmission station, wherein pieces of locational information for a predetermined number of transmission stations are registered in the reception station in a predetermined order, the stream reception method comprising:
a designation step capable of sequentially designating the pieces of locational information registered in the predetermined order, the designation step designating a transmission station in accordance with an operation by the user;
a selection step of selecting a plurality of transmission stations specified by the locational information designated in the designation step and the locational information near the designated locational information;
a transmission step of generating a plurality of distribution requests for requesting each of the transmission stations selected in the selection step to distribute a stream, and sending out the distribution requests;
a reception step of receiving each of the streams sent out by the plurality of transmission stations in response to each of the distribution requests sent out in the transmission step;
a storage step of buffering each of the streams received in the reception step; and
a reproduction step of reproducing the stream which is stored in the storage step and distributed by the transmission station designated in the designation step.
